# EUROPEAN PATENT SPECIFICATION

(11) **EP 1 815 659 B1**
(45) Date of publication and mention of the grant of the patent: **10.09.2008**
(21) Application number: 05800847.5
(22) Date of filing: 09.11.2005
(51) Int. Cl.: H04L 29/06

(54) **METHOD, DEVICE, AND SOFTWARE FOR KEEPING TRACK OF CONTENT**
VERFAHREN, EINRICHTUNG UND SOFTWARE ZUM VERFOLGEN VON INHALT
PROCEDE, DISPOSITIF ET LOGICIEL POUR SUIVRE UN CONTENU

(30) Priority: 15.11.2004 EP 04105760
(43) Date of publication of application: 08.08.2007
(73) Proprietor: Koninklijke Philips Electronics N.V., 5621 BA Eindhoven (NL)
(72) Inventor: BODLAENDER, Maarten, P., NL-5656 AA Eindhoven (NL)
(74) Representative: Groenendaal, Antonius W. M.
(86) International application number: PCT/IB2005/053681
(87) International publication number: WO 2006/051491

(56) References cited:
- EP-A- 1 339 200
- US-A1- 2003 055 977
- US-A1- 2004 139 180

## Description

The invention generally relates to the field of computer networks and more particularly to a method, a client device and a computer program product for keeping track of content in devices of a network.

In the field of peer-to-peer networking, the UPnP^{™} standard is often used as the connectivity standard. This standard defines entities such as UPnP^{™} control points and UPnP^{™} devices and is frequently used for home networks. A UPnP^{™} device is a logical entity having a set of services which it offers to different elements of the network and a UPnP^{™} control point is a logical entity which tries to get access to a UPnP^{™} device. A physical device may contain any number of UPnP^{™} devices and UPnP^{™} control points. Normally, a physical device comprising a UPnP^{™} control point is termed a client device, while a physical device comprising a UPnP^{™} device is typically termed just a device. Examples of different types of UPnP^{™} devices are media servers and media renderers. A media server stores media content and can stream it over the network. A media renderer can accept such a stream and render or present it. A media server may be provided, for instance, in a PC or eHub and a media renderer may be provided, for instance, in a Streamium television set. A home network may include several such devices, client devices, media servers and media renderers as well as other devices.

When a client device accesses or controls a device, such as a media server, it may perform operations such as locating content items and ordering the start of streaming the content item, which may be in the form of a media file. However, such streaming is then associated with the client device via which streaming was commenced. If a user of the home network would like to select a content item that has been streamed on the network, it is hard to locate that content unless the client device that ordered the streaming is used. Furthermore, a user might like to change the client device from which streaming control is performed, i.e. continue streaming a content item while changing the device controlling the stream. If a user wants to perform the above-mentioned operations, the client device needs to locate the content item again on the media server. This can be time-consuming and may require extra processing operations. Moreover, it may be annoying to an end user, because a media device could include thousands of content items, which makes it hard to locate the desired item.

US 2003/0055977 describes a system comprising a session transfer module and a number of client devices. A session can be transferred from a first client device to a second client device. A user can invoke the session transfer module via the first client device and can then select the device that is to receive the redirected session. The session transfer module then receives the command and transfers the session from the first client device to the second client device. Furthermore, a session history can be transferred from the first client device to the second client device via the session transfer module. This system is centralized, in which a central session transfer module transfers a session from one client device to another. A transfer can only take place if a user specifies, on said first device, to which second device the session is to be transferred. This unnecessarily complicates the transfer of a session.

Thus, there is a need for a way of allowing improved and simpler access to content provided by devices on a network.

It is an object of the invention to allow simpler access to content provided by devices on a network.

In accordance with a first aspect of the invention, this object is achieved by a method of keeping track, in a client device, of content in devices of a network, the method comprising the steps of:
- discovering devices in a network,
- obtaining information about events provided by at least some discovered devices,
- obtaining additional information related to an event provided by a first discovered device, which event has been activated in relation to another client device, and
- storing said additional information, such that a user can access content related to an event by using said additional information.

In accordance with a second aspect of the invention, this object is also achieved by a client device for keeping track of content in devices of a network, the client device comprising:
- at least one memory comprising a list of contents associated with devices in the network and corresponding location information, and
- a control unit arranged to:
   - at least order the discovery of devices in a network,
   - obtain information about events provided by at least some discovered devices,
   - obtain additional information related to an event provided by a first discovered device, which event has been activated in relation to another client device, and
   - store said additional information in said memory, such that a user can access content related to an event by using said additional information.

In accordance with a third aspect of the invention, this object is also achieved by a computer program product for keeping track of content in devices of a network, the computer program product comprising a computer program code which, when loaded in said client device, causes a client device to:
- at least order the discovery of devices in a network,
- obtain information about events provided by at least some discovered devices,
- obtain additional information related to an event provided by a first discovered device, which event has been activated in relation to another client device, and
- store said additional information, such that a user can access content related to an event by using said additional information.

The invention has the advantage of providing greater freedom for a user of a network, because the bond between content and client device is loosened. According to the invention, it is possible to access virtually any content that has been provided on a network from any client device without undue burden on the user. The invention thus allows a fast and simple switch-over from client device to client device without a user having to relocate network-provided content he wants to access. The invention is easy and simple to implement in a client device. Furthermore, it does not require standardization beyond the normal control and monitoring of streams in the network in order to be implemented.

As defined in claim 2, the additional information comprises an indicator for locating content being processed for the other client device. This allows a fast and direct locating of the content once a switch from client device to client device is performed.

As defined in claim 3, at least some of the additional information is obtained by locating it on the first discovered device, which is advantageous when not all of the additional information needed for a user to correctly identify content is provided in relation to an event.

As defined in claim 4, this located additional information includes metadata associated with the content. This has the advantage of obtaining information that allows a user to more easily know what content has been streamed on the network.

As defined in claim 5, the event is related to playing of a media stream, with the client device keeping track of the playing time. This feature allows a switch-over from client device to client device in the middle of a stream without a user having to start from the beginning or miss content.

As defined in claim 7, the additional information is provided in a history list, which allows a fast location of the most recently accessed or streamed content on the network.

As defined in claim 8, the additional information is provided in a favorites list, which allows a fast location of content that has been accessed most frequently on the network.

The general idea behind the invention thus is that a client device obtains additional information related to an event provided by a discovered device, which event has been activated because of another client device. Because of this, it is possible to easily locate content that has been provided on the network.

These and other aspects of the invention are apparent from and will be elucidated with reference to the embodiments described hereinafter.

The invention will now be explained in more detail with reference to the accompanying drawings, in which
Fig 1 shows diagrammatically a network, with a client device according to the invention,
Fig. 2 is a block-schematic diagram of a client device according to the invention,
Fig. 3 shows a first list mapping different media files together with location information that is stored in the client device shown in Fig. 2,
Fig. 4 shows diagrammatically signals exchanged between client devices and a server of the network in Fig. 1,
Fig. 5 shows a flow chart of a method according to the invention for keeping track of content in devices provided in the client device shown in Fig. 2, and
Fig. 6 shows a computer program product in the form of a CD ROM disc for storing a program code for carrying the invention into effect.

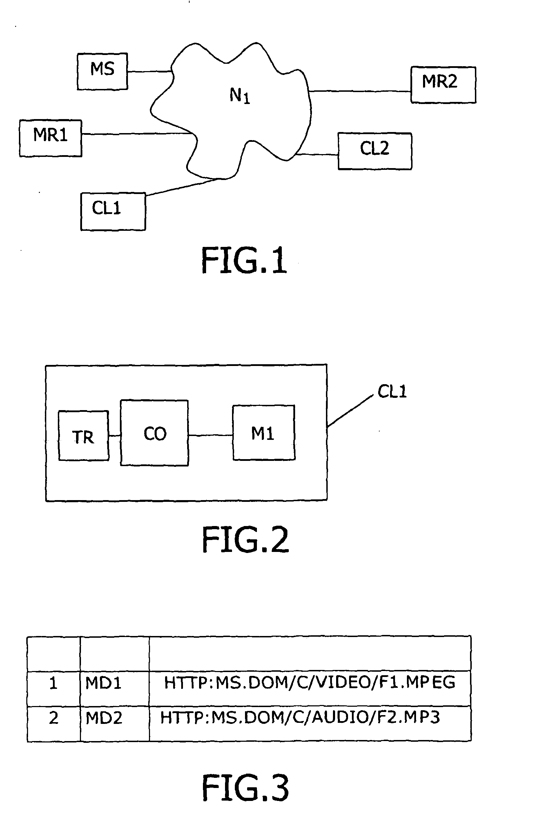

Fig. 1 shows diagrammatically a peer-to-peer computer network N, to which a number of physical entities is connected. The network N₁ comprises a first device MS, a second device MR1, a third device MR2, a first client device CL1 and a second client device CL2, all of which are separate physical entities. A UPnP^{™} device is a logical entity that has a set of different services which it offers to different elements in a network. A media server is a UPnP^{™} device that is provided in a physical device, such as, for instance, a PC or an eHub, and here the first device MS. A media server stores content and can stream it over the network, where examples of such content are MP3 files, streamed web radio and streamed video, for instance, MPEG-coded video. A media renderer is a UPnp^{™} device that is provided in a physical entity, as in a specialized television set, for instance, a Streamium TV or a PC or any other type of entity capable of presenting a media stream. A media renderer can accept streams provided by a media server and render them to a user. Here, media renderers are provided in the third and second devices MR1 and MR2. It should be realized that one such physical entity can support more UPnP^{™} devices. In order to better understand the devices MS, MR1 and MR2, they will hereinafter provide one logical UPnP^{™} device each. In the following description, no distinction will therefore be made between a physical entity and a logical UPnP^{™} device. The first device MS will therefore be referred to hereinafter as a media server, the second device MR1 will be referred to as a first media renderer and the third device MR2 will be referred to as a second media renderer MR2.

Two other entities in the network N₁ are client devices which will hereinafter each be assumed to comprise a UPnP^{™} control point, which accesses the services of UPnP^{™} devices provided by devices MS, MR1 and MR2. However, it should be noted that a UPnP^{™} control point can also be provided in any other device which the client device can contact and then also in physical devices that provide UPnP^{™} devices. For the sake of easier understanding of the invention, the control point is thus hereinafter assumed to be provided in a client device and will therefore not be further explained. Furthermore, it should be noted that the number of devices is kept low in the network in order to better explain the invention. In fact, there may be several more media servers, media renderers, client devices as well as a multitude of other types of devices in the network, such as printers, internet gateways and more PCs.

The network N₁ may be a wireless network, for instance, a wireless LAN network or a Bluetooth^{™} network, but is not limited to this and may also be a fixed network like a LAN network as well as a mixture with a wireless and a wired part. The peer-to-peer networking is here enabled by the UPnP^{™} standard, but other ways of connecting are also applicable, such as SLP (Service Location Protocol) or Jini.

Fig. 2 is a block-schematic diagram of the first client device CL1 in accordance with an embodiment of the invention. The device includes a control unit CO connected to a memory M1. The control unit CO is also connected to a transceiving unit TR for communicating with the network. The client device may be a PC, a laptop computer, a portable communication device, such as a cellular phone, an organizer or a remote control such as an iPronto control marketed by Philips.

Fig. 3 shows a content list provided in the memory M1. The memory includes a history list with activities seen on the network, which comprises metadata MD1 associated with a first file F 1 and metadata MD2 associated with a second file F2 together with location information for locating the files. The first file F1 is located with a URI (Uniform Resource Identifier) HTTP: MS.DOM/C/VIDEO/Fl.MPEG, while the second file F2 is located with a URI HTTP:MS.DOM/C/AUDIO/F2.MP3. Each URI points to the media server MS. The way in which this list is created will be described hereinafter. It is possible to display only the metadata to a user of the client device or a combination of metadata and location information.

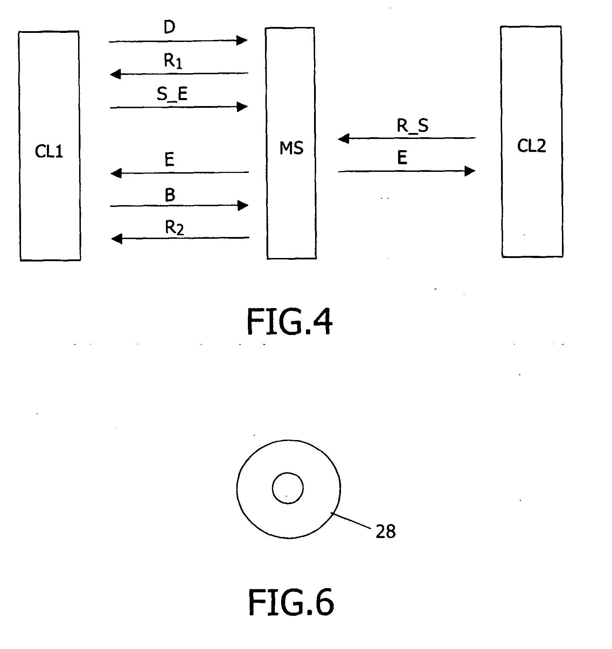

Fig. 4 shows diagrammatically signals exchanged between the first client device CL1 and the media server MS as well as signals exchanged between the second client device CL2 and the media server MS. Also these signals will be described in more detail hereinafter.

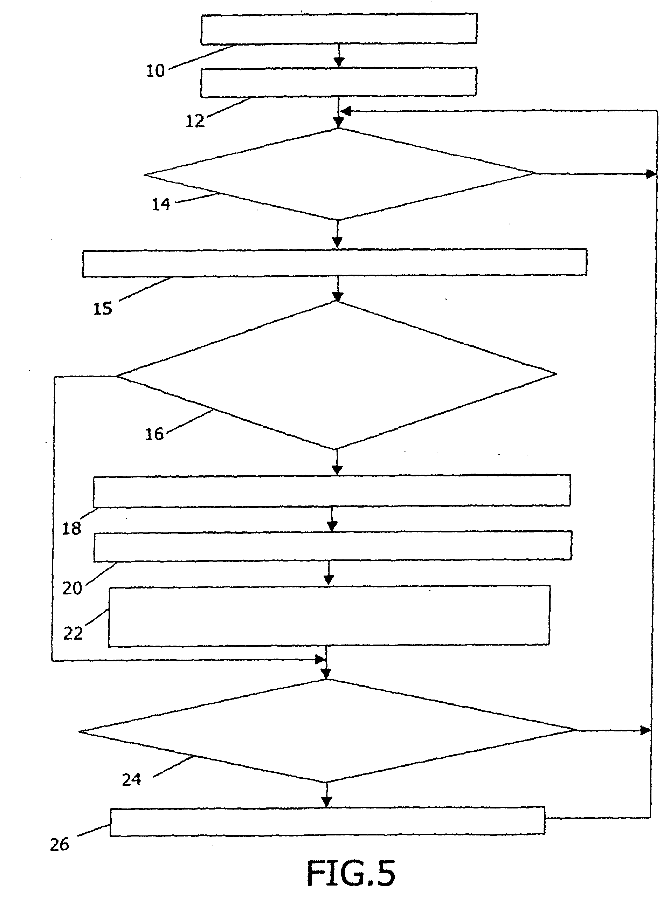

Fig. 5 shows a flow chart of a method of keeping track of content in devices of the network, which method is implemented in the first client device.

Now that the environment in which the invention is carried into effect has been described, a method of keeping track of content in devices of the network that is implemented in a client device will be described with reference to Figs. 1 to 5. The first client device CL1 is connected to the network N₁, wherein communication with the network is carried out by the transceiving unit TR under the control of the control unit CU. The first client device CL 1 first discovers the devices of the network, step 10, which is done by the control unit CO ordering the transceiving unit TR to make a discovery search D, which search is an M-search in accordance with the UPnP^{™} standard. The search may be of the type regarding either all devices of the network, or only devices of a certain type or the service of a certain type, wherein the type then preferably refers to devices that can provide media content. Each device that matches the search then responds with its name on the network as well as its capabilities. For instance, the media server MS, which is here also denoted as a first discovered device, sends such a response R₁. Based on these responses, the control unit CO of the first client device CL1 then decides which devices are of interest. The control unit CO then orders the transceiving unit TR to send a request for a subscription to events S_E to the devices it finds interesting, step 12. In the present example, it sends such a subscription request S_E to the media server MS. In this way, the first client device CL1 can obtain information about events in the media server MS.

Once an event takes place in a selected device, this device sends event messages E to the first client device CL1, wherein one such device is the media server MS, as has been explained above. The control unit CO of the first client device CL1 then continuously checks if the transceiving unit TR has received such an event notification. If it has not, step 14, the control unit CO keeps on waiting for the reception. If it has, step 14, it goes on and extracts event-related information from the event message, step 15, and thereafter checks if it has knowledge of the circumstances regarding the event in the device in question, step 16. In this case, the circumstance may be that the content of a media file on the media server MS is being streamed to a rendering device. In any case, the event is related to the processing of content, possibly in the form of a file. If the first client device CL1 had itself ordered an action that caused the event, it would naturally have information about the circumstances, like the location of the file and what file was being streamed and possibly metadata associated with the file. It might also have such knowledge if it had previously found out whether other client devices like the second client device CL2 had caused a previous event related to the current event. In order to explain the invention, it is assumed that the second client device CL2 sends a request for streaming of media content R_S from the media server MS to the second media renderer MR2. This request R_S is thus sent to the media server MS. When this is done, the media server MS sends an event notification E to all devices subscribing to the event, here both client devices CL1 and CL2. It is also assumed that also the second client device CL2 subscribes to the event.

The transceiving unit TR of the first client device CL1 therefore receives the event notification E, step 14, which in the present embodiment is in the form of a HTTP post message with XML content. This event message includes a first piece of additional information in the form of an indicator for locating the file, which is a URI pointing out the location of the file in question. The transceiving unit TR then forwards the event message E to the control unit CO, which extracts the event-related information in the form of an indicator, i.e. the file name and location information of an event-related file, step 15, and investigates if it has previous knowledge of the stream and its location, step 16. If it has, the method continues with step 24. If it has not, step 16, further additional information in relation to the event or streamed data is obtained. If the event was caused by another client device, like the second client device CL2, the first client device CL1 might thus not have information about the circumstances regarding the event. In the present example, the event message E comprised a first piece of additional information in the form of the URI HTTP: MS DOM/CNIDEO/F1.MPEG, which the first client device CL1 had no previous knowledge of. Therefore, the first client device CL1 obtains further additional information by browsing the directory of the event-generating device, i.e. the media server MS, step 18. In order to do this, the control unit CO orders the transceiving unit CO to send a browsing signal B from the first client device CL1 to the media server MS and, as a result R₂, the metadata MD1 associated with the file F1 is obtained, step 20. In this way, the first client device CL1 can browse the directory of the media server MS and obtain the metadata associated with the file F1 being streamed as well as conform the location of the file. The metadata may include such things as the name of a movie or a song, together with additional information such as the director and actors' names if it is a movie or an artist and album name if it is a song. Subsequently, the control unit CO stores the information of the file and location in the memory M1 together with the metadata, step 22. In this way, the history list is updated. It should be noted that the metadata may alternatively be obtained by searching through the directory of the media server MS.

If the media is a stream being played, step 24, the client device CL1 also keeps track of the playing time, step 26. This is done by starting a clock at the time the file F1 is being played and halting the clock at pauses, in which the occurrence of these events is typically signaled by an event message from the media server MS. The clock is also started again if the file F1 is started and reset once the file being streamed is stopped, which is a simple task because these events are also notified to client devices that subscribe to them.

When this has been done, it is a simple task for the first client device CL 1 to take over control of the stream or set up a parallel stream.

The different method steps of Fig. 5 are outlined in table I below.

**TABLE I**

| | |
|---|---|
| 10 | DISCOVER DEVICES |
| 12 | SUBSCRIBE TO EVENTS |
| 14 | EVENT NOTIFICATION RECEIVED? |
| 15 | EXTRACT EVENT-RELATED INFORMATION |
| 16 | NAME AND LOCATION KNOWN OF EVENT-RELATED FILE ? |
| 18 | BROWSE DIRECTORY OF EVENT-GENERATING DEVICE |
| 20 | OBTAIN FILE NAME AND LOCATION OF EVENT-RELATED FILE |
| 22 | STORE FILE NAME IN HISTORY LIST WITH LOCATION INFORMATION IN M1 |
| 24 | EVENT RELATED TO PLAYING OF MEDIA FILE ? |
| 26 | KEEP TRACK OF PLAYING TIME |

A scenario showing the advantages of the invention will now be described with reference to Figs. 1 and 3. Let it be assumed that a user has ordered, via the second client device CL2, the media server MS to stream the file F1, which is a video file, to the second media renderer MR2, which might have a small screen. Now, if the user wants to switch to rendering the media file on the second media renderer MR2, which might have a larger screen, he can do so via the first client device CL1. Via this device, the user can easily set up the stream to the first media renderer MR2 by just looking in the history list, which, according to the invention, thus includes information about at least that file, and by selecting that file for streaming. By selecting in the history list, the first client device CL1 can then directly locate the file in question on the media server and, because of the knowledge of the playing time, also cause the media server to stream the file to the first media renderer MR1 from the instant when the media file was stopped from being streamed to the second media renderer MR2. The user thus does not have to locate the file or the playing position in the file, but can resume watching the decoded file either from the beginning or the point at which it was stopped.

Searches, events and subscriptions to events are described in more detail in UPnP^{™} Device Architecture, Version 1.0, 8 June 2000, by UPnP Forum. Media servers and the use of browsing are described in more detail in MediaServer:1 Device Template Version 1.01, June 25, 2002 by UPnP Forum. Media Renderers are described in MediaRenderer:1 Device Template Version 1.01, 25 June 2002 by UPnP Forum. Http post messages are described in more detail in RFC 2616, Hypertext Transfer Protocol -HRRP/1.1 The Internet Society, June 1999.

The invention has a number of advantages. It provides greater freedom for a user of a network, because the bond between content and client device is loosened. According to the invention, it is possible to access virtually any content that has been provided on a network from any client device without undue burden on the user. The invention thus allows a fast and simple switch-over from client device to client device without a user having to relocate network-provided content he wants to access. It is easy and simple to implement in a client device. Furthermore, it does not require standardization beyond the normal control and monitoring of streams in the network in order to be implemented. By keeping track of the time, it is possible to switch over in the middle of a stream without having to start from the beginning or miss content.

Variations are possible within the scope of the invention. The invention is not limited to switching over the streaming. It is also possible to stream a copy. The list does not have to be a history list. It may also be, for instance, a favorites list stating the content items that have been accessed most frequently on the network. It is further possible to provide both a history and a favorites list at the same time. The time being played can be used for more than starting playing from the same instant when a switch-over is being performed. It is also possible to start playing, for instance, slightly before or slightly after that position. The invention can be further implemented without keeping track of the time and only keep track of file name and location. Finally, it should be noted that the invention is not limited to streamed media, but is applicable to any other content whose location would be advantageous to know, such as, for instance, still images or computer games. The streaming of content provided in one file has been described hereinbefore. It should also be noted that content can be stored in more than one file and can also be provided in the form of a real-time stream.

The invention is not limited to a media server that streams content, but can also be provided for a device that presents information on itself, like a PC, as long as the presentation is controlled through different client devices.

In the description of the invention, a file was located directly by using a URI. It should be noted that this feature can be combined with name resolving in order to obtain the address of a device.

The invention can be implemented in any suitable form including hardware, software, firmware or combinations thereof However, the invention is preferably implemented as computer software stored in a program memory and run on one or more data processors and/or digital signal processors. The program code can also be provided on a computer program product, one of which is shown in Fig. 6 in the form of a CD ROM disc 28. This is just an example and various other types of computer program products, such as memory sticks, are also feasible. The computer program product can also be provided in a pure program code which can be downloaded, for instance, from a further server, possibly via the Internet. The elements and components of an embodiment of the invention may be physically, functionally and logically implemented in any suitable way. Indeed, the functionality may be implemented in a single unit, in a plurality of units, or may be physically and functionally distributed between different units and processors.

Although the invention has been described with reference to a specific embodiment, it is not intended to be limited to the specific form set forth herein. The scope of the invention is rather limited only by the accompanying claims. Use of the verb "comprise" and its conjugations does not exclude the presence of elements or steps other than those stated in the claims. Furthermore, although individually listed, a plurality of means, elements or method steps may be implemented by e.g. a single unit or processor. Although individual features may be included in different claims, these may possibly be combined advantageously, and the inclusion in different claims does not imply that a combination of features is not feasible and/or advantageous. In addition, singular references do not exclude a plurality. Thus, references to "a", "an", "first", "second", etc. do not preclude a plurality. Reference signs in the claims are provided merely by way of clarifying example and shall not be construed as limiting the scope of the claims in any way.

## Claims

1. A method of keeping track, in a client device (CL1), of content in devices of a network, the method comprising the steps of:
- discovering (D) devices (MS, MR1, MR2) in a network (N₁), (step 10),
- obtaining information about events (E) provided by at least some discovered devices, (step 12), **characterized by**:
- obtaining additional information (E, R₂) related to an event provided by a first discovered device (MS), which event has been activated in relation to another client device (CL2), (steps 15, 20), and
- storing said additional information, (step 22), such that a user can access content related to the event by using said additional information.

2. A method as claimed in claim 1, wherein said additional information comprises an indicator for locating content, F1, being processed for said other client device in relation to said first discovered device.

3. A method as claimed in claim 1, wherein the step of obtaining additional information comprises locating at least some of said additional information in said first discovered device.

4. A method as claimed in claim 3, wherein additional information being located in said first discovered device comprises metadata associated with content being processed for said other client device in relation to said first discovered device.

5. A method as claimed in claim 1, wherein said event is related to playing a media stream provided by said first discovered device and further comprising the step of keeping track of the playing time of said media stream, (step 26).

6. A method as claimed in claim 1, wherein the step of storing comprises updating a list of contents provided for at least some discovered devices in the network with said additional information.

7. A method as claimed in claim 6, wherein said list states content in accordance with the instant when the content was accessed.

8. A method as claimed in claim 6, wherein said list is associated with content that has been accessed most frequently on the network.

9. A client device (CL1) for keeping track of content in devices of a network, the client device comprising:
- at least one memory (M1) comprising a list of contents associated with devices in the network and corresponding location information, and
- a control unit (CO) arranged to:
- at least order the discovery (D) of devices (MS, MR1, MR2) in a network (N₁),
- obtain information about events (E) provided by at least some discovered devices, **characterized by** the control unit arranged to:
- obtain additional information (E, R₂) related to an event provided by a first discovered device (MS), which event has been activated in relation to another client device (CL2), and
- store said additional information in said memory, such that a user can access content related to an event by using said additional information.

10. A computer program product (50) for keeping track of content in devices of a network, the computer program product comprising a computer program code which, when loaded in a client device (CL1), causes said client device to:
- at least order the discovery (D) of devices (MS, MR1, MR2) in a network (N₁),
- obtain information about events (E) provided by at least some discovered devices, **characterized by** causing said client device to:
- obtain additional information (E, R₂) related to an event provided by a first discovered device (MS), which event has been activated in relation to another client device (CL2, and
- store said additional information, such that a user can access content related to an event by using said additional information.

## Patentansprüche

1. Verfahren zum Verfolgen von Inhalt in einer Kundenanordnung (CL1) von Anordnungen eines Netzwerkes, wobei das Verfahren die nachfolgenden Verfahrensschritte umfasst:
- das Auffinden (D) von Anordnungen (MS, MR1, MR2) in einem Netzwerk (N₁), (Schritt 10),
- das Erhalten von Information über Ereignisse (E), geliefert von einigen aufgefundenen Anordnungen (Schritt 12), **gekennzeichnet durch**:
- das Erhalten zusätzlicher Information (E, R₂) in Bezug auf ein von einer ersten aufgefundenen Anordnung (MS) gelieferten Ereignisses, wobei dieses genannte Ereignis in Bezug auf eine andere Kundenanordnung (CL2) aktiviert worden ist (Schritte 15, 20), und
- das Speichern der genannten zusätzlichen Information (Schritt 22), so dass ein Benutzer auf Inhalt in Bezug auf das Ereignis zugreifen kann, und zwar **durch** Verwendung der genannten zusätzlichen Information.

2. Verfahren nach Anspruch 1, wobei die genannte zusätzliche Information einen Indikator zum Orten von Inhalt, F1, aufweist, der für die genannte andere Kundenanordnung in Bezug auf die genannte erste aufgefundene Anordnung verarbeitet wird.

3. Verfahren nach Anspruch 1, wobei der Schritt der Erhaltung zusätzlicher Information das Orten wenigstens gewisser Teile der genannten zusätzlichen Information in der genannten ersten aufgefundenen Anordnung umfasst.

4. Verfahren nach Anspruch 3, wobei zusätzliche Information, die in der genannten ersten aufgefundenen Anordnung geortet wird, Metadaten aufweist, die mit Inhalt assoziiert ist, der für die genannte Kundenanordnung in Bezug auf die genannte erste aufgefundene Anordnung verarbeitet worden ist.

5. Verfahren nach Anspruch 1, wobei das genannte Ereignis sich auf das Abspielen eines Mediastroms bezieht, der von der genannten ersten aufgefundenen Anordnung geliefert wird, und weiterhin mit dem Verfahrensschritt der Verfolgung der Abspielzeit des genannten Mediastroms (Schritt 26).

6. Verfahren nach Anspruch 1, wobei der Schritt der Speicherung das Aktualisieren einer Liste mit Inhalt mit der genannten zusätzlichen Information umfasst, die für wenigstens einige der aufgefundenen Anordnungen in dem Netzwerk geliefert wird.

7. Verfahren nach Anspruch 6, wobei die genannte Liste Inhalt angibt in Übereinstimmung mit dem Zeitpunkt, wo auf den Inhalt zugegriffen wurde.

8. Verfahren nach Anspruch 6, wobei die genannte Liste mit Inhalt assoziiert wird, auf die in dem Netzwerk am meisten zugegriffen worden ist.

9. Kundenanordnung (CL1) zur Verfolgung von Inhalt in Anordnungen eines Netzwerkes, wobei die Kundenanordnung die nachfolgenden Elemente umfasst:
- wenigstens einen Speicher (M1) mit einer Liste von Inhalten, assoziiert mit Anordnungen in dem Netzwerk und entsprechend Ortsinformation, und
- eine Steuereinheit (CO), vorgesehen für die nachfolgenden Zwecke:
-- wenigstens das Ordnen der Auffindung (D) von Anordnungen (MS, MR1, MR2) in einem Netzwerk (N₁),
-- das Erhalten von Information über Ereignisse (E), geliefert von wenigstens einigen aufgefundenen Anordnungen, **dadurch gekennzeichnet, dass** die Steuereinheit vorgesehen ist:
- zum Erhalten zusätzlicher Information (E, R₂) in Bezug auf ein Ereignis, geliefert von einer ersten aufgefundenen Anordnung (MS), wobei dieses Ereignis in Bezug auf eine andere Kundenanordnung (CL2) aktiviert worden ist, und
- zum Speichern der genannten zusätzlichen Information in dem genannten Speicher, so dass ein Benutzer auf Inhalt in Bezug auf ein Ereignis zugreifen kann, und zwar durch Verwendung der genannten zusätzlichen Information.

10. Computerprogrammprodukt (50) zur Verfolgung von Inhalt in Anordnungen eines Netzwerkes, wobei das Computerprogrammprodukt einen Computerprogrammcode aufweist, der, wenn in eine Kundenanordnung (CL1) geladen, dafür sorgt, dass die Kundenanordnung:
- wenigstens das Auffinden (D) von Anordnungen (MS, Mir1, MR2) in einem Netzwerk (N₁) ordnet,
- Information über Ereignisse (E) erhält, geliefert von wenigstens einigen aufgefundenen Anordnungen, **dadurch gekennzeichnet, dass** dafür gesorgt wird, dass die genannte Kundenanordnung:
- zusätzliche Information (E, R₂) in Bezug auf ein Ereignis erhält, geliefert von einer ersten aufgefundenen Anordnung (MS), wobei dieses Ereignis in Bezug auf eine andere Kundenanordnung (CL2) aktiviert worden ist, und
- die genannte zusätzliche Information speichert, so dass ein Benutzer auf Inhalt in Bezug auf ein Ereignis zugreifen kann, und zwar durch Verwendung der genannten zusätzlichen Information.

## Revendications

1. Procédé permettant de suivre, dans un dispositif client (CL1), du contenu dans des dispositifs d'un réseau, le procédé comprenant les étapes suivantes :
- la découverte (D) de dispositifs (MS, MR1, MR2) dans un réseau (N₁), (étape 10),
- l'obtention d'informations concernant des événements (E) fournies par au moins certains dispositifs découverts (étape 12), **caractérisé par** :
- l'obtention d'informations supplémentaires (E, R₂) se rapportant à un événement fournies par un premier dispositif découvert (MS), lequel événement a été activé relativement à un autre dispositif client (CL2), (étapes 15 et 20), et
- le stockage desdites informations supplémentaires, (étape 22), de sorte qu'un utilisateur puisse accéder à du contenu se rapportant à l'événement en utilisant lesdites informations supplémentaires.

2. Procédé suivant la revendication 1, dans lequel lesdites informations supplémentaires comprennent un indicateur pour localiser du contenu, F1, en cours de traitement pour ledit autre dispositif client relativement audit premier dispositif découvert.

3. Procédé suivant la revendication 1, dans lequel l'étape d'obtention d'informations supplémentaires comprend la localisation d'une partie au moins desdites informations supplémentaires dans ledit premier dispositif découvert.

4. Procédé suivant la revendication 3, dans lequel des informations supplémentaires en cours de localisation dans ledit premier dispositif découvert comprennent des métadonnées associées à du contenu en cours de traitement pour ledit autre dispositif client relativement audit premier dispositif découvert.

5. Procédé suivant la revendication 1, dans lequel ledit événement se rapporte à la lecture d'un flux multimédia fourni par ledit premier dispositif découvert et comprenant en outre l'étape de suivi du temps de lecture dudit flux multimédia, (étape 26).

6. Procédé suivant la revendication 1, dans lequel l'étape de stockage comprend la mise à jour d'une liste de contenus fournis pour au moins certains dispositifs découverts dans le réseau avec lesdites informations supplémentaires.

7. Procédé suivant la revendication 6, dans lequel ladite liste précise du contenu en fonction de l'instant auquel on a accédé au contenu.

8. Procédé suivant la revendication 6, dans lequel ladite liste est associée à du contenu auquel on a accédé le plus fréquemment sur le réseau.

9. Dispositif client (CL1) pour suivre du contenu dans des dispositifs d'un réseau, le dispositif client comprenant :
- au moins une mémoire (M1) comprenant une liste de contenus associés à des dispositifs dans le réseau et des informations d'emplacement correspondantes, et
- une unité de commande (CO) à même de :
- au moins ordonner la découverte (D) de dispositifs (MS, MR1, MR2) dans un réseau (N₁),
- obtenir des informations concernant des événements (E) fournies par au moins certains dispositifs découverts, **caractérisé en ce que** l'unité de commande est à même de:
- obtenir des informations supplémentaires (E, R₂) se rapportant à un événement fournies par un premier dispositif découvert (MS), lequel événement a été activé relativement à un autre dispositif client (CL2), et
- stocker lesdites informations supplémentaires dans ladite mémoire, de sorte qu'un utilisateur puisse accéder à du contenu se rapportant à un événement en utilisant lesdites informations supplémentaires.

10. Produit formant programme informatique (50) pour suivre du contenu dans des dispositifs d'un réseau, le produit formant programme informatique comprenant un code de programme informatique qui, lorsqu'il est chargé dans un dispositif client (CL1), amène ledit dispositif client à :
- au moins ordonner la découverte (D) de dispositifs (MS, MR1, MR2) dans un réseau (N₁),
- obtenir des informations concernant des événements (E) fournies par au moins certains dispositifs découverts, **caractérisé en ce que** cela amène ledit dispositif client à :
- obtenir des informations supplémentaires (E, R₂) se rapportant à un événement fournies par un premier dispositif découvert (MS), lequel événement a été activé relativement à un autre dispositif client (CL2), et
- stocker lesdites informations supplémentaires, de sorte qu'un utilisateur puisse accéder à du contenu se rapportant à un événement en utilisant lesdites informations supplémentaires.
